# EUROPÄISCHE PATENTSCHRIFT

(11) **EP 0 597 327 B1**
(45) Veröffentlichungstag und Bekanntmachung des Hinweises auf die Patenterteilung: **20.01.1999**
(21) Anmeldenummer: 93117466.8
(22) Anmeldetag: 28.10.1993
(51) Int. Cl.: H01R 9/26, H01R 9/24, H04Q 1/14

(54) **Modulare Mehrfachanschlussleiste für Verteiler und Verteilersysteme im Schwachstrom-Anlagebau**
Multiple terminal bloc for distribution frames and systems of low current installation
Bloc de connexion multiple modulaire pour installation et système de distribution à courant faible

(30) Priorität: 11.11.1992 CH 3485/92
(43) Veröffentlichungstag der Anmeldung: 18.05.1994
(73) Patentinhaber: Reichle + De-Massari AG Elektro-Ingenieure, 8620 Wetzikon (CH)
(72) Erfinder: Reichle, Hans, CH-8620 Wetzikon (DE)
(74) Vertreter: Petschner, Goetz

(56) Entgegenhaltungen:
- EP-A- 0 413 978
- EP-A- 0 446 572
- DE-A- 1 537 628
- DE-C- 3 726 741

## Beschreibung

Die vorliegende Erfindung betrifft eine module Mehrfachanschlussleiste für Verteiler und Verteilersysteme im Schwachstrom-Anlagebau.

In der Telefonie oder anderen Signal-Uebertragungsbereichen werden immer höhere Anforderungen sowohl an die Vielseitigkeit von Anschlussmöglichkeiten als auch an eine kompakte Bauweise gestellt, was ansich im Widerspruch steht.

Module Mehrfachanschlussleisten für Verteiler und Verteilersysteme verlangen neben den Anschlussblöcken zum lötfreien Andrahten der Installationsdrähte an Anschluss- oder Trennkontakte u.a. Ueberspannungsschutz-Kassetten mit Kammerbereichen zur auswechselbaren Aufnahme von Ueberspannungssicherungspatronen, welche einerseits mit einer Erdungsschiene und andrerseits mit, an einem zum Einstecken in die Anschlussleiste bestimmten Kontaktsteg endenden Leiterbahnen in Kontakt stehen. Weiter sind elektrische Leiter, die gegen störende äussere elektrische Felder durch eine sehr gut leitende metallische Umhüllung abgeschirmt sind, unerlässlich. Problematisch ist dabei aber deren Verlegung im Anschluss-System, insbesondere bezüglich einer HF-mässig optimalen Erdung der Abschirmung im Leiteranschlussbereich. Zudem müssen diese Leiter an die Kontaktbereiche der Installationsdrähte vereinzelt herangeführt werden.

Aufgabe der vorliegenden Erfindung ist nun die Schaffung einer modulen Mehrfachanschlussleiste der vorgenannten Art, welche sich in kompakter Bauweise modular aufbauen lässt.

Dies wird erfindungsgemäss erreicht durch die Kombination von
a) mindestens einer metallischen Erd- und Montageschiene für die Anordnung in einem Gestell oder Gehäuse;
b) mindestens einem, auf die Erd- und Montageschiene aufsteckbaren oder aufsetzbaren, netzseitigen Mehrfach-Kontakt- und Anschlussblock mit Mitteln zur Schneid-Klemm-Andrahtung, vorzugsweise an welchem eine, einen Bereich der Kabelmantelabschirmung des netzseitigen Uebertragungskabels kontaktierend aufnehmende, in Kontakt mit der Erd- und Montageschiene stehende Federklammer seitlich angeordnet ist;
c) mindestens einem, auf die Erd- und Montageschiene aufsteckbaren oder aufsetzbaren, installationsseitigen Mehrfach-Kontakt- und Anschlussblock mit kontaktmitteln zur Schneid-Klemm-Andrahtung und Anschluss- oder Trennkontakten;
d) und mindestens einer, sowohl mit der Erd- und Montageschiene als auch mit den Kontaktmitteln des installationsseitigen Mehrfach-Kontakt- und Anschlussblockes in Kontakt bringbaren, seitlich aufsteckbaren Ueberspannungskassette;
wobei sich die Ueberspannungskassette untenseitig eines, vom Körper des installationsseitigen Mehrfach-Kontakt- und Anschlussblockes abragenden, den Installationsbereich vom Schutzbereich trennenden Kabelkanals erstreckt.

Durch diese Massnahmen wird eine ausserordentlich kompakte Bauweise erreicht mit integrierter Kabelführung und die Möglichkeit der Verwendung von Prüfstecker und Beschaltungswerkzeuge unterschiedlichster Fabrikate. Zudem wird eine hohe Sicherheit durch die erfindungsgemässe Trennung von Installationsbereich und Schutzbereich mittels Kabelkanal erreicht.

Weiter erlaubt die erfindungsgemässe Anordnung eine Ausgestaltung derart, dass auf die Mehrfach-Kontakt- und Anschlussblöcke ein Abdeckplättchen aufsetzbar ist.

Weiter kann eine vorteilhafte Ausgestaltung so sein, dass die Federklammer einen Klemmfederbügel umfasst, der mit einem verzahnten Gegenbügel zusammenwirkt.

Diese Federklammer ist so universell einsetzbar.

Eine beispielsweise Ausführungsform des Erfindungsgegenstandes ist nachfolgend anhand der Zeichnung näher erläutert. Es zeigen:
- Fig. 1: in schaubildartiger explosiver Darstellung eine erfindungsgemässe module Mehrfachanschlussleiste; und
- Fig. 2: in schaubildartiger Darstellung in grösserem Massstab eine Federklammer der Anordnung gemäss Fig. 1.

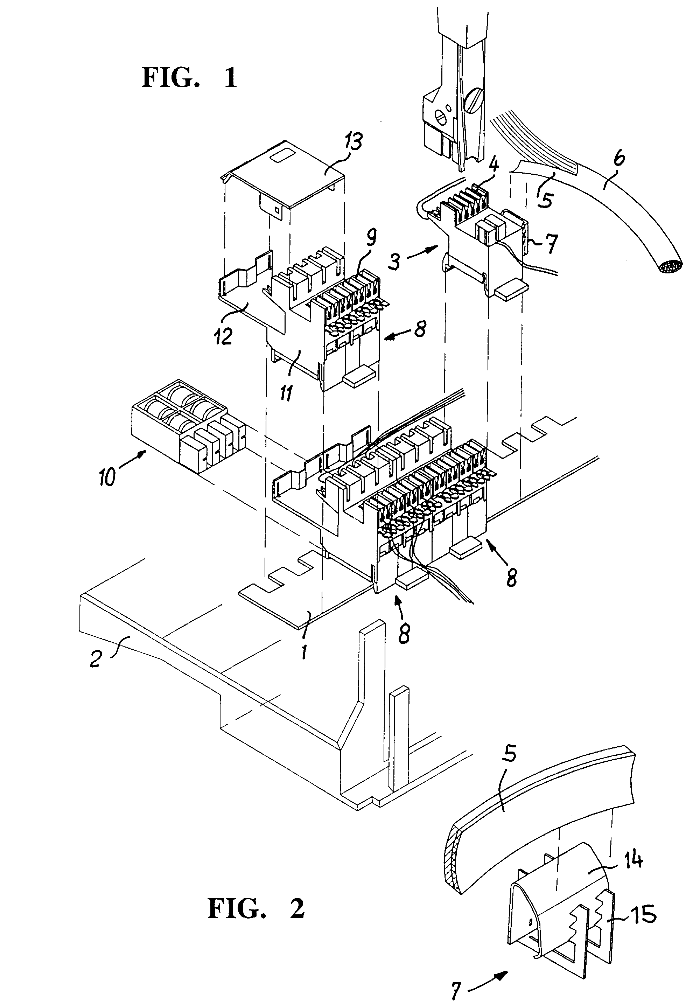

Die module Mehrfachanschlussleiste für Verteiler und Verteilersysteme im Schwachstrom-Anlagebau gemäss Fig. 1 umfasst eine metallische Erd- und Montageschiene 1 für die Anordnung in einem Gehäuse 2. Auf diese Erd- und Montageschiene 1 sind aufsteckbar oder aufsetzbar netzseitige Mehrfach-Kontakt- und Anschlussblöcke 3 angeordnet, mit Mitteln 4 zur Schneid-Klemm-Andrahtung, vorzugsweise an welchen eine, einen Bereich der Kabelmantelabschirmung 5 des netzseitigen Uebertragungskabels 6 kontaktierend aufnehmende, in Kontakt mit der Erd- und Montageschiene 1 stehende Federklammer 7 seitlich angeordnet sind.

Wie Fig. 2 mehr im Einzelnen zeigt, umfasst diese Federklammer 7 einen Klemmfederbügel 14, welcher mit einem verzahnten Gegenbügel 15 zusammenwirkt.

Dies ergibt eine optimale Kontaktierung an der Kabelmantelabschirmung 5 mit dem zusätzlichen Vorteil, dass das Kabel 6 nicht genau abgemantelt werden muss.

Gemäss Fig. 1 sind weiter auf die Erd- und Montageschiene 1 aufsteckbare oder aufsetzbare installationsseitige Mehrfach-Kontakt- und Anschlussblöcke 8 mit Mitteln 9 zur Schneid-Klemm-Andrahtung und Anschluss- oder Trennkontakten angeordnet. Weiter sind sowohl mit der Erd- und Montageschiene 1 als auch mit den Kontaktmitteln des installationsseitigen Mehrfach-Kontakt- und Anschlussblockes 8 in Kontakt bringbare, seitlich aufsteckbare Ueberspannungskassette 10 vorgesehen, wobei sich die Ueberspannungskassette 10 untenseitig eines, vom Körper 11 des installationsseitigen Mehrfach-Kontakt- und Anschlussblockes 8 abragenden, den Installationsbereich vom Schutzbereich trennenden Kabelkanals 12 erstrecken.

Auf den Mehrfach-Kontakt- und Anschlussblöcke 3 resp. 8 sind Abdeckplättchen 13 aufsetzbar.

Durch diese vorbeschriebenen Massnahmen wird nunmehr eine ausserordentlich komptakte Bauweise mit integrierter Kabelführung und die Möglichkeit der Verwendung von Prüfstecker und Beschaltungswerkzeuge unterschiedlichster Fabrikate sowie eine hohe Sicherheit durch die erfindungsgemässe Trennung von Installationsbereich und Schutzbereich mittels Kabelkanal erreicht.

Es wird Schutz beansprucht wie folgt:

## Patentansprüche

1. Module Mehrfachanschlussleiste für Verteiler und Verteilersysteme im Schwachstrom-Anlagebau mit
a) mindestens einer metallischen Erd- und Montageschiene (1) für die Anordnung in einem Gestell oder Gehäuse (2);
b) mindestens einem, auf auf die Erd- und Montageschiene (1) aufsteckbaren oder aufsetzbaren, netzseitigen Mehrfach-Kontakt- und Anschlussblock (3) mit Mitteln (4) zur Schneid-Klemm-Andrahtung;
c) mindestens einem, auf die Erd- und Montageschiene (1) aufsteckbaren oder aufsetzbaren, installationsseitigen Mehrfach-Kontakt- und Anschlussblock (8) mit kontaktmitteln (9) zur Schneid-Klemm-Andrahtung und Anschluss- oder Trennkontakten;
d) und mindestens einer, sowohl mit der Erd- und Montageschiene (1) als auch mit den Kontaktmitteln des installationsseitigen Mehrfach-Kontakt- und Anschlussblockes (8) in Kontakt bringbaren, seitlich aufsteckbaren Ueberspannungskassette (10);
wobei sich die Ueberspannungskassette (10) untenseitig eines, vom Körper (11) des installationsseitigen Mehrfach-Kontakt- und Anschlussblockes (8) abragenden, den Installationsbereich vom Schutzbereich trennenden Kabelkanals (12) erstreckt.

2. Module Mehrfachanschlussleiste nach Anspruch 1, dadurch gekennzeichnet, dass auf die Mehrfach-Kontakt- und Anschlussblöcke (3 resp. 8) ein Abdeckplättchen (13) aufsetzbar ist.

3. Module Mehrfachanschlussleiste nach Anspruch 1, dadurch gekennzeichnet, dass die Federklammer (7) einen Klemmfederbügel (14) umfasst, der mit einem verzahnten Gegenbügel (15) zusammenwirkt.

4. Module Mehrfachanschlussleiste nach Anspruch 1, dadurch gekennzeichnet, dass an dem netzseitigen Mehrfach-kontakt- und Anschlußblock (3) eine, einen Bereich der Kabelmantelabschirmung (5) des netzseitigen Uebertragungskabels (6) kontaktierend aufnehmende, in Kontakt mit der Erd- und Montageschiene (1) stehende Federklammer (7) seitlich angeordnet ist.

## Claims

1. A modular multiple terminal block for distribution frames and distribution systems in low-current installations, having
a) at least one metallic mounting and grounding rail (1) for the arrangement in a frame or a casing (2);
b) at least one supply-side multiple contact and terminal block (3) that can be attached to or placed on the grounding and mounting rail (1) and has means (4) for wiring by means of an insulation piercing connecting device;
c) at least one installation-side multiple contact and terminal block (8) which can be attached to or placed on the grounding and mounting rail (1), having contact means (9) for wiring the connecting or isolating contacts by means of an insulation piercing connecting device;
d) and at least one overvoltage cassette (10) that can be attached at the side and can be brought in contact with the grounding and mounting rail (1) and also with the contact means of the installation-side multiple contact and terminal block (8);
with the overvoltage cassette (10) extending at the bottom of a cable duct (12) which projects away from the body (11) of the installation-side multiple contact and terminal block (8) and separates the installation area from the protected area.

2. A modular multiple terminal block according to Claim 1, characterized in that a cover tab (13) can be placed on the multiple contact and terminal blocks (3, 8).

3. A modular multiple terminal block according to Claim 1, characterized in that the spring clamp (7) has a clamping spring clip (14) which works together with a mating strap (15) having teeth.

4. A modular multiple terminal block according to Claim 1, characterized in that a spring clamp (7) which accommodates an area of the cable sheathing shield (5) of the supply-side transmission cable (6) and contacts it and is also in contact with the grounding and mounting rail (1) is arranged on the side of the supply-side multiple contact and terminal block (3).

## Revendications

1. Bloc de connexion multiple modulaire pour installation et système de distribution à courant faible, comprenant
a) au moins un rail métallique de terre et de montage (1) pour le placement dans un châssis ou un boîtier (2);
b) au moins un bloc de contact et de connexion multiple (3) côté secteur, qui peut être enfiché ou placé sur le rail de terre et de montage (1) avec des moyens pour le raccord par déplacement d'isolant;
c) au moins un bloc de contact et de connexion multiple (8) côté installation qui peut être enfiché ou placé sur le rail de terre et de montage (1) avec des moyens de contact (9) pour le raccord par déplacement d'isolant de contacts de connexion ou de rupture;
d) et au moins une cassette de surtension (10) qui peut être mise en contact aussi bien avec le rail de terre et de montage (1) qu'avec les moyens de contact du bloc de contact et de connexion multiple (8) côté installation et peut être enfichée par le côté;
la cassette de surtension (10) s'étendant sur le dessous d'un caniveau de câbles (12) dépassant du corps (11) du bloc de contact et de connexion multiple (8) côté installation et séparant la zone d'installation de la zone de protection.

2. Bloc de connexion multiple modulaire selon la revendication 1, caractérisé en ce qu'une plaquette de recouvrement (13) peut être posée sur les blocs de contact et de connexion multiple (3 et 8).

3. Bloc de connexion multiple modulaire selon la revendication 1, caractérisé en ce que la bride de ressort (7) comprend un étrier de ressort de serrage (14), qui agit conjointement avec un contre-étrier (15) denté.

4. Bloc de connexion multiple modulaire selon la revendication 1, caractérisé en ce qu'une bride de ressort (7) recevant avec contact une zone du blindage de la gaine de câble (5) du câble de transmission (6) côté alimentation et étant en contact avec le rail de terre et de montage (1) est disposée latéralement sur le bloc de contact et de connexion multiple (3) côté alimentation.
